# EUROPÄISCHE PATENTANMELDUNG

(11) **EP 3 791 764 A1**
(43) Veröffentlichungstag der Anmeldung: **17.03.2021**
(21) Anmeldenummer: 20195419.5
(22) Anmeldetag: 10.09.2020
(51) Int. Cl.: A47J 31/44

(54) **KAFFEE-STATION SOWIE VERFAHREN ZU IHREM BETRIEB**

(30) Priorität: 16.09.2019 DE 102019124859
(71) Anmelder: Völkl Patente GmbH & Co. KG, 83052 Bruckmühl (DE)
(72) Erfinder: Völkl, Thomas, 83052 Bruckmühl (DE)
(74) Vertreter: Weickmann & Weickmann PartmbB

(57) **Zusammenfassung**

Um die bei einer automatisierten Kaffeestation (200) die für das Tassen-Lager (50) häufig vorhandenen Randbedingungen
- Aufstellung vor einer Wand
- geringer Platz,
trotz hohem Kostendruck zu erfüllen, wird der Heißgetränke-Bereiter (1), insbesondere die Kaffee-Maschine (1), über einen Zuförderer (31) und vorgelagerten Entnahme-Förderer (32) aus dem Tassen-Lager (50) automatisch mit der richtigen Tasse (T) beliefert, wobei bei dem Tassen-Lager (50) unter je einem Paar von benachbarten, in Tiefenrichtung (50') verlaufenden Spuren (56a, b) eines Lager-Bodens (56) z.B. ein Reibriemen (58) als Gefäß-Transporteur (55) umläuft, der jedoch über keinen eigenen Antriebs-Motor verfügt.

Der vor der Front des Tassen-Lagers (50) verlaufende Entnahme-Förderer (32) ist in der Höhe verfahrbar relativ zum Tassen-Lager (50) und auf jede von dessen Etagen (50a, b, c) einstellbar um durch dortigen Kontakt mit dem Reibriemen (58) einen Ausschub der vordersten Tasse (T) von der Entnahme-Spur (56b) und Übergabe an den Entnahme-Förderer (32) zu bewirken.

Nach Verlagern in eine Höhenlage fluchtend zum Zufuhr-Förderer (31) wird die darauf stehende Tasse (T) an diesen übergeben und vom Zufuhr-Förderer (31) weitertransportiert unter die Auslauföffnung (2) der Kaffee-Maschine (1).

## Beschreibung

### I. Anwendungsgebiet

Die Erfindung betrifft eine sogenannte Kaffee-Station, worunter Geräte zum Herstellen und Abgeben von Heißgetränken jeder Art, worunter außer Kaffee-Getränken auch heiße Milch-Getränke, Tee, und alle anderen heißen, flüssigen, zumindest fließfähigen Produkte für die Zwecke der vorliegenden Anmeldung verstanden werden.

### II. Technischer Hintergrund

Eine solche Kaffee-Station bindet - bei entsprechendem Durchsatz - in einer Gastronomie einen Mitarbeiter vollständig, der - selbst wenn es sich nicht um eine sogenannte Sieb-Kaffeemaschine, sondern einen Vollautomaten handelt - durchgängig damit beschäftigt ist, das passende Gefäß - sei es Tasse oder Glas - unter die richtige Auslauföffnung zu stellen, die Maschine zu bedienen, die gefüllten Gefäße weg zu nehmen, und zusammen mit einer Untertasse sowie Löffel auf einer Übergabe-Station für die Bedienung zur Verfügung zu stellen.

Dabei besteht ein Problem darin, dass der Platz in der Umgebung des Heißgetränke-Bereiters, im Folgenden kurz Kaffeemaschine genannt, begrenzt ist und vor allem bei vielen unterschiedlichen zu bevorratenden Gefäßen noch das Nachfüllen der Regale mit leeren, sauberen Gefäßen hinzukommt bis hin zum Nachfüllen der Aufwärm-Fläche - sofern vorhanden - auf der Kaffeemaschine mit Tassen.

Da auch in der Gastronomie die Personalkosten inzwischen den Hauptkostenfaktor darstellen und vor allem geeignetes Personal schwer zu rekrutieren ist, wird versucht, auch im Thekenbereich eine Automatisierung und Personalreduzierung durchzuführen.

### III. Darstellung der Erfindung

### a) Technische Aufgabe

Es ist daher die Aufgabe gemäß der Erfindung, die Heißgetränke-Station wenigstens teilweise zu automatisieren und dadurch entweder bei vorhandenem Personalstand den Durchsatz zu erhöhen oder den Personalaufwand zu reduzieren.

### b) Lösung der Aufgabe

Diese Aufgabe wird durch die Merkmale die Ansprüche 1 und 14 gelöst. Vorteilhafte Ausführungsformen ergeben sich aus den Unteransprüchen.

Hinsichtlich der Kaffee-Station wird diese Aufgabe primär dadurch gelöst, dass außer dem Heißgetränke-Bereiters - in aller Regel einem Kaffee-Vollautomat ggfs. mit Zusatzfunktion für weitere Heißgetränke - eine Zufuhr-Einheit vorhanden ist, die erfindungsgemäß automatisiert ist, um abhängig von der Getränkeorder - die vorzugsweise drahtlos von der Bedienung an der Kaffee-Station eingeht - automatisch die richtige Sorte eines leeren Gefäßes, meist einer Tasse, aus einem Tassen-Lager - welches auch andere Gefäße als nur Tassen beinhalten kann - zu entnehmen und dem Heißgetränke-Bereiter, insbesondere der Kaffeemaschine, zuzuführen und das Gefäß unter der richtigen Auslauföffnung für das gewünschte heiße flüssige Getränk zu positionieren. Vorzugsweise soll danach das gefüllte Gefäß von dieser Füll-Position auch wieder entfernt werden und zu einer Übergabe-Position zur Übergabe an die Bedienung verbracht werden.

Zu diesem Zweck verfügt die Zuführ-Einheit zunächst über einen gesteuert antreibbaren Zufuhr-Förderer, auf dem das benötigte leere Gefäß herangeführt und unter der Auslauföffnung positioniert wird, wobei der Zufuhr-Förderer vorzugsweise auf der dem Bediener zugewandten Vorderseite des Heißgetränke-Bereiters verläuft und in aller Regel in einer fixen Höhenlage angeordnet ist.

Mehr oder weniger weit von dem Heißgetränke-Bereiter, insbesondere der Kaffee-Maschine, entfernt befindet sich ein sogenanntes Tassen-Lager, in dem natürlich außer Tassen auch die anderen Sorten von benötigten Gefäßen für Heißgetränke, wie etwa Teegläser oder gar Suppen-Terrinen, bevorratet werden können, wobei der Zufuhr-Förderer das Tassen-Lager mit dem Heißgetränke-Bereiter verbindet.

Das Tassen-Lager besitzt meist mehrere Etagen übereinander, in denen die Gefäße bevorratet werden, und kann auch beheizt sein um Tassen oder Gläser temperiert an den Kaffee-Automaten auszuliefern.

In der Regel befindet sich das Gestell des Tassen-Lagers in einem umgebenden Lager-Gehäuse oder ist als solches Lager-Gehäuse ausgebildet, welches in aller Regel an der Rückseite geschlossen ist, um das Tassen-Lager auch vor einer Wand aufstellen zu können und/oder beheizen zu können.

Sowohl das Beladen als auch das automatische Entladen des Tassen-Lagers erfolgt deshalb von der Vorderseite her, was jedoch erfordert, dass die von der Frontseite her eingegebenen Tassen oder Gläser nicht einfach vor die bereits in einer in Tiefrichtung verlaufenden Reihe von im Tassen-Lager befindlichen Gefäßen gestellt werden, da sie dann wieder als erstes entnommen würden und die in einer dieser in Tiefenrichtung verlaufenen Reihe ganz hinten stehenden Gefäße nur sehr selten benutzt würden und dann eventuell wieder verschmutzt sind.

Um das First-in-first-out-Prinzip bei einem solchen Tassen-Lager zu realisieren, sind je zwei nebeneinander liegende, in die Tiefenrichtung und vorzugsweise parallel zueinander verlaufende, Spuren, auf denen Gefäße gelagert werden sollen, an ihrem hinteren Ende miteinander gekoppelt, sodass auf der einen Spur am vorderen Ende neu eingegebene Behälter entlang dieser Spur - der Belade-Spur - ins Tassen-Lager hinein transportiert, insbesondere nach hinten transportiert und ans hintere Ende der daneben liegenden Spur - der Entnahme-Spur - übergeben und von dort aus in der Entnahme-Spur nach vorne bis zur Entnahme transportiert werden.

Die Koppelung der Spuren erfolgt mittels eines Transport-Elementes, beispielsweise eines flexiblen Zugelementes wie eines Riemens oder einer Kette. Es können auch mehr als 2 Spuren mittels eines Zugelementes, insbesondere Riemens, miteinander verbunden werden, und die Spuren können auch anders als mit ihrer Haupterstreckungs-Richtung nur in Tiefenrichtung und/oder parallel zueinander verlaufen.

Realisiert wird dies beispielsweise mittels je eines Gefäß-Transporteurs, der bei einem Tassen-Lager mit mehreren Etagen übereinander zumindest in jeder Etage vorhanden ist, wobei vorzugsweise für je zwei der wie beschrieben miteinander gekoppelten, benachbarten Spuren ein gemeinsamer Gefäß-Transporteur vorhanden ist. Auf einer Etage können auch eine Vielzahl solcher Paare von Spuren und Gefäß-Transporteure nebeneinander vorhanden sein.

Vorzugsweise befindet sich in allen miteinander gekoppelten Spuren, in denen derselbe Gefäß-Transporteur verläuft, die gleiche Sorte von Gefäßen, die der Steuerung der Kaffee-Station auch bekannt sein muss für das automatische entnehmen der richtigen Sorte eines Gefäßes.

Vorzugsweise verläuft als Gefäß-Transporteur unter jedem Paar von gekoppelten Spuren ein über wenigstens zwei Umlenkrollen in einer horizontalen Ebene umlaufendes, flexibles Zugelement, insbesondere ein Riemen, insbesondere ein Reibriemen, der als Reibriemen über die Auflagefläche der entsprechenden Etage etwas nach oben vorsteht, und über Reibschluss die darauf stehenden Gefäße mit verfährt, wenn der Reibriemen angetrieben wird.

Der Riemen oder ein analoges flexibles Zugelement kann auch über nach oben über die Oberfläche des Bodens vorstehende Mitnehmer verfügen, welche das entsprechende Gefäß vor sich her schieben. Dann muss das Zugelement selbst nicht über die Oberseite des Bodens vorstehen.

Vorzugsweise sind die Böden oder Fachböden auf den einzelnen Etagen aus dem Grundgestell des Tassen-Lagers entnehmbare Platten, die einen entsprechenden Durchbruch oder eine Nut aufweisen, in denen der Riemen umläuft und insbesondere über die Oberseite der Platte geringfügig vorstehen kann.

Um den konstruktiven Aufwand und auch die Kosten eines solchen Tassen-Lagers in Grenzen zu halten, besitzen die Gefäß-Transporteure keinen eigenen Antriebsmotor, sondern werden für die Entnahme eines Gefäßes gesteuert mittels eines Entnahme-Förderers in Bewegung versetzt, der stromaufwärts des Zufuhr-Förderers angeordnet ist und vor der wenigstens teilweise offenen Frontseite des Tassen-Lagers etwa horizontal verläuft.

Dabei kann der Entnahme-Förderer mit dem Zufuhr-Förderer auch ganz oder teilweise funktionsvereinigt sein.

Nachdem ein gewünschtes Gefäß - also das vorderste Gefäß aus einer Entnahme-Spur - aus dem Tassen-Lager vom Gefäß-Transporteure auf den Entnahme-Förderer übergeben ist, transportiert dieser das Gefäß weiter und übergibt es an den Zufuhr-Förderer für den Weitertransport zur Auslauföffnung der Kaffee-Maschine.

Der Entnahme-Förderer besitzt einen eigenen Antrieb und Antriebsmotor und kann von der Steuerung der Kaffee-Station gesteuert angetrieben werden. Um diese relative kostenintensive Einheit nur ein einziges Mal zu benötigen, ist ein solcher Entnahme-Förderer vorzugsweise in der Höhe relativ beweglich zum Tassen-Lager angeordnet, kann also auf die Höhe jeder gewünschten Etage im Tassen-Lager verfahren werden.

Um den Gefäß-Transporteur, insbesondere den Reibriemen, vom Entnahme-Förderer aus anzutreiben, besitzt dieser ein Koppelelement, vorzugsweise ein drehbares Koppelelement, welches in Wirkverbindung mit dem Entnahme-Förderer gebracht werden kann.

Sofern auf einer Etage nebeneinander mehrere Paare von miteinander gekoppelten Spuren, also jeweils einer Beladespur und einer Entnahmespur, vorhanden sind, könnte das Koppelelement in Längsrichtung entlang der Frontseite des Tassen-Lagers horizontal verlagerbar sein auf die Position des gewünschten Paares von Spuren, also des zu aktivierenden und anzutreibenden Gefäß-Transporteurs, insbesondere des Reibriemens, sodass der Entnahme-Förderer mittels seines Koppelelementes nur mit dem Gegenelement eines von mehreren auf der gleichen Etage nebeneinander vorhandenen Gefäß-Transporteuren in Wirkverbindung gerät.

Das Kontaktieren mit dem Gegenelement am Gefäß-Transporteur - wobei bei einem Reibriemen häufig der Reibriemen selbst das Gegenelement ist - kann alternativ auch über Anfahren einer entsprechenden Höhenlage, in der sich das Gegenelement befindet, auf einfache Art und Weise erreicht werden. Bei mehreren nebeneinander auf einer Etage vorhandenen Gefäß-Transporteuren und damit Gegenelementen dürfen sich diese - also die nebeneinander befindlichen gegen Elemente oder die ganzen nebeneinander befindlichen Gefäß-Transporteure - nicht ganz auf der gleichen Höhe befinden, sodass bei Kontaktieren eines Gefäß-Transporteurs die auf nächstliegenden Höhenlagen befindlichen anderen Gefäß-Transporteure nicht in Wirkverbindung mit dem Entnahme-Förderer geraten

Nach Herstellen der Wirkverbindung zwischen Entnahme-Förderer und Gefäß-Transporteur wird der Entnahme-Förderer in Gang gesetzt und dadurch die auf der Entnahmespur vorderste z.B. Tasse mittels des Gefäß-Transporteurs aus dieser Spur heraus auf den unmittelbar davor laufenden Entnahme-Förderer verlagert, insbesondere verschoben, wobei natürlich alle im Wirkbereich dieses Gefäß-Transporteurs befindlichen Gefäße ebenfalls um eine Position entlang der Reihe oder Spur mit bewegt werden.

Noch bevor das nächste Gefäß auf dieser Entnahmespur diese verlässt, wird der Entnahme-Förderer vom Tassen-Transporteur entkoppelt, indem Koppelelement und Gegenelement außer Eingriff gebracht werden. Anschließend wird vorzugsweise der Entnahme-Förderer mit dem darauf befindlichen Gefäß auf die Höhe des Zufuhr-Förderers gebracht, falls der Entnahme-Förderer das in der Höhe verlagerbare Element ist und nicht das Tassen-Lager oder der mit dem Entnahme-Förderer funktionsvereinigte Zufuhr-Förderer.

Dann kann die gewünschte, auf dem Entnahme-Förderer stehende z.B. Tasse bis zu dessen stromabwärtigen Ende weiter transportiert und an den stromabwärts folgenden Zufuhr-Förderer übergeben werden, die das Gefäß unter der richtigen Auslauföffnung des Heißgetränke-Bereiters positioniert.

Beinahe unabhängig von einer stattfindenden Entnahme von Gefäßen aus dem Tassen-Lager können vom Personal zu beinahe jedem Zeitpunkt neue saubere Gefäße auf den Beginn der Beladespur eines Paares von Spuren gesetzt und bei Bedarf auch darauf - unter Relativverschiebung zum stillstehenden Zugelement, insbesondere Reibriemen - nach hinten geschoben werden.

Lagerböden mit darauf stehenden Gefäßen können auch vollständig beladen in das Lagergestell eingelegt werden, beispielsweise auf einem solchen Gefäß-Transporteur wie etwa dem umlaufenden Reibriemen abgestellt werden, was das Befüllen des Tassen-Lagers beschleunigt gegenüber dem Eingeben von einzelnen Tassen oder Gläsern in eine Entnahmespur. Der Gefäß-Transporteur kann auch Bestandteil des Lager-Bodens sein, in diesem geführt sein und zusammen mit dem Lager-Boden aus dem Gefäßlager entnommen und in dieses wieder eingesetzt werden.

Auf diese Art und Weise benötigen die in relativ großer Anzahl vorhandenen Lagerböden innerhalb des Tassen-Lagers keinen direkten eigenen motorischen Antrieb, sondern lediglich einen einfaches und kostengünstiges, flexibles Zugelement wie einen Reibriemen und die entsprechenden Um lenkrollen.

Einzeln ansteuerbare Antriebs-Motore benötigen somit lediglich der Entnahme-Förderer, einerseits für die eigene Vorwärtsbewegung und damit den Antrieb des Entnahme-Förderers, andererseits insbesondere für die Höhenbewegung des Entnahme-Förderers - sowie der Zufuhr-Förderer, der in aller Regel ein vom Entnahme-Förderer separater Förderer ist, jedoch auch einstückig zusammen mit diesem ausgebildet sein kann.

Hinsichtlich der Vorgehensweise wird diese Aufgabe dadurch gelöst, dass ein Gefäß einer gewünschten Sorte automatisch aus einem Tassen-Lager entnommen und dem Heißgetränke-Bereiter, z.B. der Kaffee-Maschine, zugeführt und dort positionsgenau unter der richtigen Auslauföffnung abgestellt und vorzugsweise danach von dieser Füllposition auch wieder abtransportiert wird.

Zu diesem Zweck wird ein Koppelelement eines Entnahme-Förderers in Wirkverbindung mit einem Gegenelement, welches bei jedem Gefäß-Transporteur im Tassen-Lager vorhanden ist, gebracht und durch Ingangsetzen des Entnahme-Förderers auch der Gefäß-Transporteur in Gang gesetzt und mittels des Gefäß-Transporteurs das vorderste Gefäß einer Entnahme-Spur, auf der gleichartige Gefäße abgestellt sind, von dieser Entnahme-Spur entnommen und auf den Entnahme-Förderer herübergeschoben. Nach Entkoppeln des Entnahme-Förderers vom Gefäß-Transporteur wird das Gefäß in der Regel weitertransportiert zum Heißgetränke-Bereiter, vorzugsweise mittels Übergabe und Weitertransport durch einen Zufuhr-Förderer, der aber auch mit dem Entnahme-Förderer funktionsvereinigt sein kann.

### c) Ausführungsbeispiele

Ausführungsformen gemäß der Erfindung sind im Folgenden beispielhaft näher beschrieben. Es zeigen:
- **Figur 1:**: die gesamte Kaffeestation in der Frontansicht,
- **Figur 1a:**: hiervon das Tassen-Lager in einer vergrößerten Detaildarstellung in einer ersten Bauform,
- **Figur 1b:**: hiervon das Tassen-Lager in einer vergrößerten Detaildarstellung in einer zweiten Bauform,
- **Figur 2:**: einen Horizontalschnitt entlang der Linie II-II der Figur 1,
- **Figur 3:**: einen Schnitt entlang der Linie III-III der Figur 2.

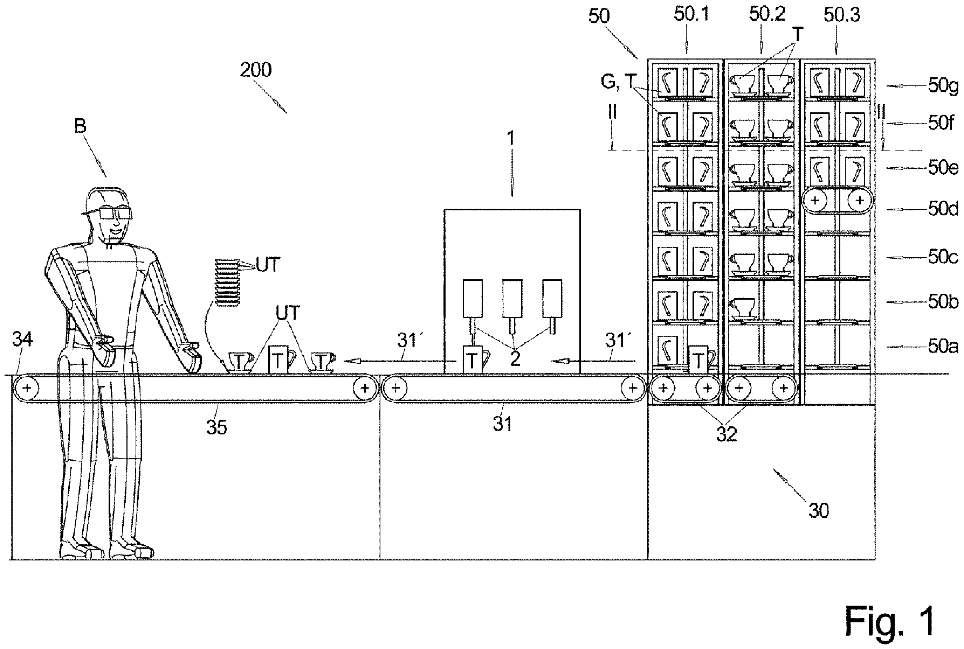

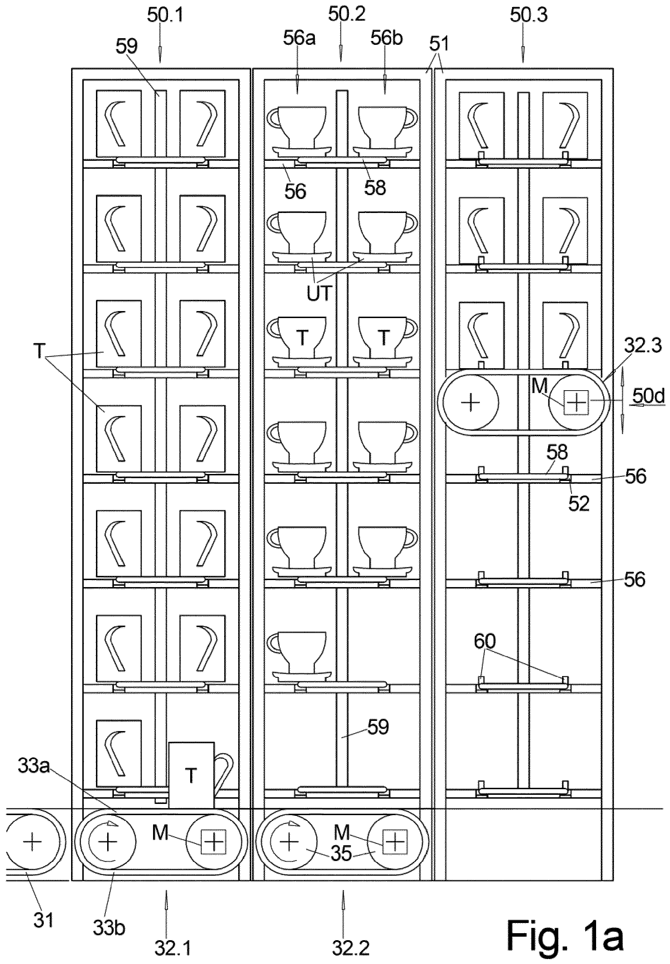

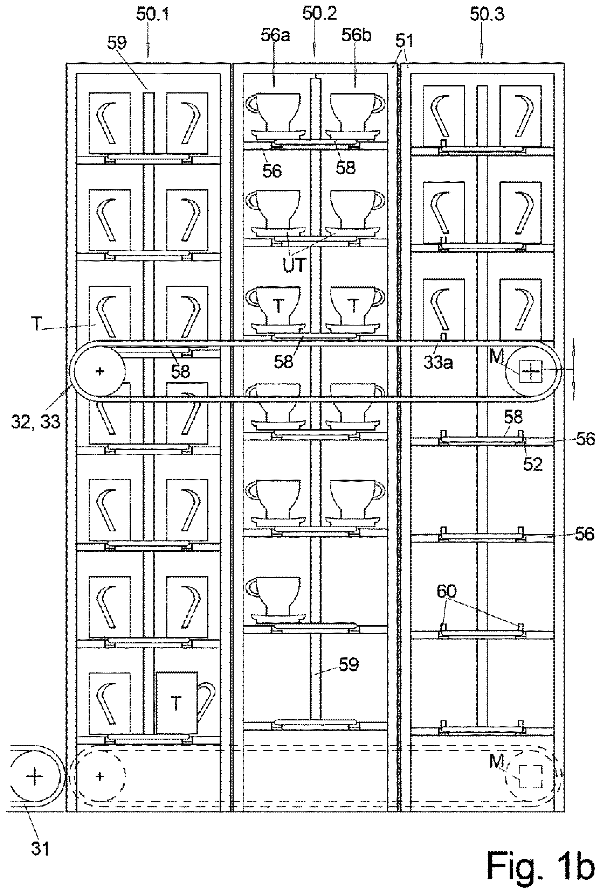

**Anhand der** **Figur 1** lässt den Zweck der automatisierten Kaffeestation 200 am besten erläutern:
Von einem Tassen-Lager 50 aus soll der Heißgetränke-Bereiter 1 - in der Regel eine vollautomatische Kaffeemaschine mit mehreren verschiedenen Auslauföffnungen 2 nebeneinander - automatisch mit dem richtigen Gefäß G, meist der richtigen Tasse T mittels einer Zufuhr-Einheit 30 versorgt werden, die der Heißgetränke-bereiter 1 automatisch füllt und die dann im gefüllten Zustand einer Bedienung B zur Verfügung gestellt werden, die diese entweder auf einer Kommissionier-Fläche 34 zu einer Bestellung zusammensetzt, beispielsweise indem sie mehrere verschiedene, gefühlte Tassen T oder auch andere gefüllte Gefäße G auf einem Tablett zusammenstellt, zu einem Tisch trägt und serviert.

Wie **Figur 1a** am besten erkennen lässt, können die Tassen T bereits auf einer Untertasse UT stehend im Tassen-Lager 50 bevorratet werden, oder die Untertassen UT stehen gemäß **Figur 1** der Bedienung B an dieser KommissionierFläche 34 zur Verfügung, wo sie bei Bedarf eine Untertasse UT manuell unter die entsprechende Tasse T stellt.

Im Folgenden ist von den Gefäßen G nur noch als Tassen T die Rede und von dem Gefäß-Lager nur noch als Tassen-Lager 50, ohne die Erfindung hierauf zu beschränken.

Die Tassen T werden in nebeneinander stehenden, regalartigen Lager-Modulen 50.1 bis 50.3, die etwa einem Schrank ohne vordere Türen entsprechen, vorgehalten jeweils auf Lager-Böden 56 - wie in der Vergrößerung in der **Figur 1a** am besten zu erkennen - wobei die Lager-Böden 56 etagenartig übereinander jeweils in einem der seitlich und hinten meist geschlossenen, vorne jedoch großenteils offenen, Gestell oder Lager-Gehäuse 51 eines der Lager-Module 50.1 bis 50.3 angeordnet sind.

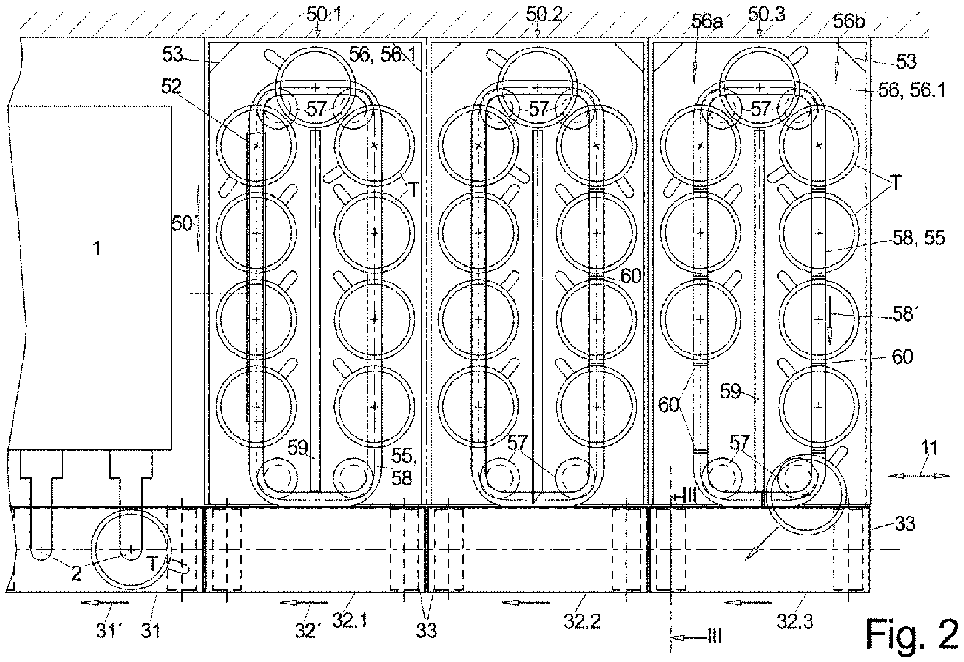

Wie **Figur 2** zeigt, sind die Tassen T auf jeden Lager-Boden 56 auf einem Paar von zwei nebeneinander in Tiefenrichtung 50' des Lager-Moduls, z. B. 50.1 verlaufenden Spuren 56a, b angeordnet, wobei zwischen den Spuren 56a, b vorzugsweise ein Spurteiler 59 verläuft, beispielsweise in Form einer aufrecht stehende Platte, um zu verhindern, dass sich Tassen T auf der einen Spur mit Tassen T auf der anderen Spur berühren und aneinanderhängen bleiben. Der Spurteiler 59 erreicht jedoch nicht dass hintere Ende der Spuren, so dass an dem hinteren Ende eine Tasse T jeweils von einer Spur in die andere durch hinüberbewegen wechseln kann.

Damit dabei die transportierte Tasse T nicht in einer der hinteren äußeren Ecken des Regal-Bodens 56 stehen bleiben kann und außer Kontakt mit dem Gefäß-Transporteur 55 geraten kann, befindet sich in diesen hinteren äußeren Ecken jeder Spur, also jedes Regal-Bodens 56, eine Eck-Führung 53, die diese Ecke abschrägt oder abrundet.

Die beiden Spuren 56a, b besitzen eine lichte Breite, die nur geringfügig größer ist als die Breite der größten darin aufzunehmenden Art von Gefäßen, insbesondere Tassen.

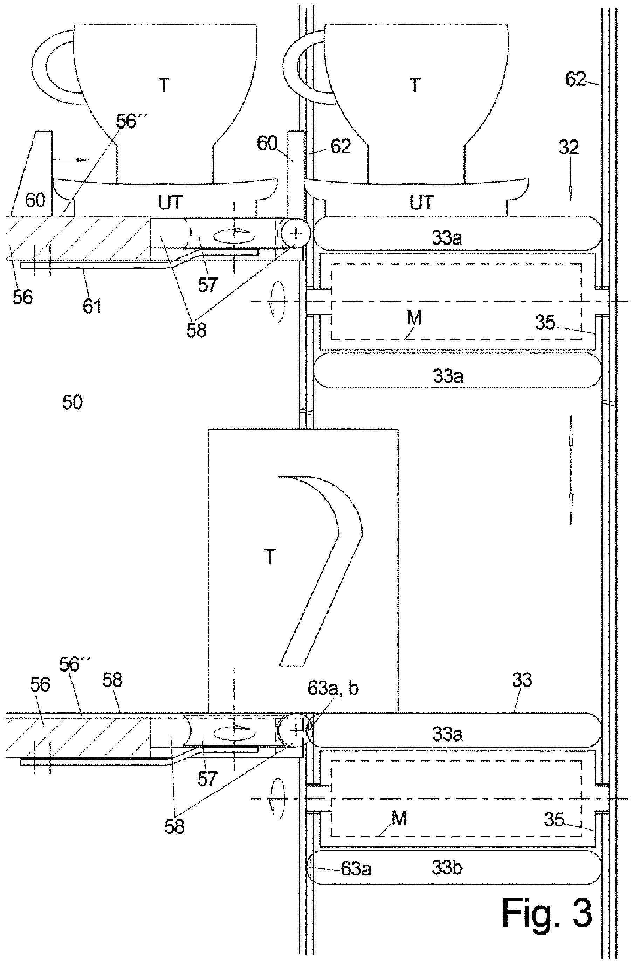

In jedem Lager-Boden 56 läuft als Gefäß-Transporteur 55 beispielsweise ein Reibriemen 58 um, der beispielsweise einen runden Querschnitt besitzt, und so in einer nach oben offenen Nut 52 des Lager-Bodens 56 angeordnet ist, dass er mit seiner Oberseite geringfügig über die Auflagefläche 56.1 des Lage-Boden 56 vorsteht, siehe **Figur 3** **in der unteren** dargestellten Etage, in **Figur 1a****,** **b** sowie **Figur 2** bei den Lager-Modulen 50.1, 50.2.

In **Figur 3** **in der oberen** dargestellten Etage, in **Figur 1a****,** **b** sowie **Figur 2** bei dem Lager-Modulen 50.3 steht dieses flexible Zugelement, z.B. der Riemen 58 dagegen nicht nach oben über die Auflagefläche 56" des Lager-Bodens 56 vor, sondern lediglich Mitnehmer 60, die an dem Zugelement 58 befestigt sind und ein Gefäß G vor sich her schieben können.

Der Reibriemen 58 oder auch eine andere Art eines endlosen Ketten-Transporteurs 55 besitzt in beiden Fällen zwei in Tiefenrichtung 50' verlaufende Trume 58a, b, die jeweils in der Mitte einer der beiden Spuren 56a, 56b verlaufen und am vorderen und hinteren Ende der Spuren über je eine, in diesem Fall je zwei, in der Aufsicht betrachtet nebeneinander liegende Umlenkrollen 57 umgelenkt werden, sodass sich im vorliegenden Fall eine etwa rechteckige Gestalt des endlosen, umlaufenden Riemens 58 in der Aufsicht betrachtet ergibt.

Die Umlenkrollen 57 sind insbesondere im Lager-Boden 56 drehbar gelagert, insbesondere in einer hierfür vorgesehenen Ausnehmung oder einem von oben nach unten offenen Durchbruch, beispielsweise an einem Tragarm 61, der an der Unterseite des Lager-Boden 56 verschraubt werden kann

Von den beiden Spuren 56a, b dient eine als Belade-Spur, in diesem Fall die linke Spur 56a, und eine als Entnahme-Spur, in diesem Fall die rechte Spur 56b, da der Riemen 58 vorzugsweise immer in der gleichen Richtung angetrieben wird. Der Gefäß-Transporteur 55, insbesondere der Riemen 58 ist deshalb vorzugsweise nur in einer Richtung antreibbar, nämlich in einer solchen Richtung, dass er entlang der Entnahmespur 56b in Richtung der wenigstens teilweise offenen Vorderseite des jeweiligen Lager-Moduls z.B. 50.3 läuft, also in Richtung deren vorderen Endes, und entlang der Belade-Spur zu deren hinteren Ende.

Der Überstand des Riemens 58 nach oben ist in **Figur 1a** übertrieben dargestellt, um die Anordnung verständlich zu machen und ist Wirklichkeit so gering, dass die darauf stehende Tasse T sich nur um eine sehr geringe Neigung links oder rechts des Reibriemens 58 nach unten neigt, um dort auf dem Lagerboden 56 aufzusetzen. Dies kann beim Antreiben des Riemens 58 dazu führen, dass sich die Tasse T beim Weitertransportieren dreht, was jedoch für die Funktion des Gefäß-Transporteurs 55 unerheblich ist.

Auf ein Vorsehen eines eigenen Antriebs an jedem Gefäß-Transporteur 55 wie jedem Treibriemen 58 kann dadurch verzichtet werden, dass bei Bedarf mittels eines Entnahme-Förderers 32 der gewünschte Gefäß-Transporteur 55 angetrieben wird:
Der Entnahme-Förderer 32, der bei mehreren nebeneinander befindlichen Lager-Modulen 50.1 bis 50.3 gemäß den **Figuren 1****,** **1a** **und** **2** bei jedem Lager-Modul 50.1 bis 50.3 jeweils einmal vorhanden ist, ist beispielsweise ein Förderband 33 welches über zwei in der horizontalen Querrichtung zur Tiefenrichtung 50' beabstandete, parallel zueinander und horizontal liegende Umlenkwalzen 36 umläuft und antreibbar von einem von der Steuerung gesteuerten Motor M ist.

Dementsprechend verläuft die Transportrichtung 32' eines Entnahme-Förderers 32, also die Bewegungsrichtung seines Oberturms, horizontal quer zur Tiefenrichtung 50', und stimmt dabei in aller Regel mit der Transportrichtung 31' des stromabwärtig angeordneten Zuförderers 31 überein.

Wie die Aufsicht der **Figur 2** zeigt, verläuft je ein Entnahmeförderer 32.1 bis 32.3 jeweils mit seinem horizontal liegenden Obertrum 33a und horizontal liegenden Untertrum 33b seines Förderbandes 33 vor der offenen Frontseite des jeweiligen Lager-Moduls und ist zusätzlich in der Höhe gesteuert verfahrbar und kann auf der Höhe jeder der Etagen 50a bis 50g angehalten werden, und zwar auf einer solchen Höhe, dass sich die Oberseite des Oberturms 33a auf der Höhe oder unmittelbar unter der Höhe der Auflagefläche 56" des jeweiligen Lager-Bodens 56 dieser Etage des Lager-Moduls befindet.

Insbesondere wird unter einer Etage eines Lager-Moduls verstanden, dass sich dort nur ein, insbesondere in einer horizontalen Ebene, umlaufender endloser Gefäß-Transporteur befindet und somit die Etage nur Spuren umfasst, die sich entlang und oberhalb der einzelnen Trume dieses Gefäß-Förderers verlaufen.

Durch das Antreiben des Gefäß-Transporteurs 55, insbesondere dessen Riemens 58, in Entnahmerichtung 58' schiebt dieser die vorderste Tasse T der Entnahmespur 56b auf den davor stehenden Entnahmeförderer 32 wie beim Entnahmeförderer 32.3 in **Figur 2** dargestellt, da diese Spur 56b nach vorne hin frei ausläuft.

Sie wird dabei entweder von einem der Mitnehmer 60, die von dem Gefäß-Transporteur 55 nach oben ragen, vorwärtsgeschoben oder bei einem Reibriemen nach Verlust des Kontaktes zum Reibriemen von der hinter ihr ebenfalls vom Reibriemen weiter transportierten nächsten Tasse, bis die Tasse T sich mehrheitlich auf der Oberseite des Obertrums 33a des Förderbandes 33 des Entnahme-Transporteurs , z.B. 32.3 in **Figur 2**, befindet.

Gleichzeitig und synchron mit dem Gefäß-Transporteur 55 bewegt sich jedoch auch der entsprechende Entnahme-Förderer 32, zum Beispiel 32.1, da dieser durch Herstellen einer Wirkverbindung zwischen beiden erst den Gefäß-Transporteur 55 antreibt, weshalb die Tasse T bei der Übergabe an den Entnahme-Transporteur 32 schräg zur Transportrichtung des Entnahme-Fahrers 32.3 auf diesen hinaufgeschoben wird.

Durch entsprechende Sensoren, die dann mit der Steuerung in Verbindung stehen, kann natürlich überprüft werden, ob sich an jeder vordersten Position einer Entnahmespur auch eine Tasse T befindet und/oder ob bei Übergabe auf den Entnahme-Förderer 32 das Gefäß so weit darauf steht, dass es nicht davon herunterfallen kann und/oder insbesondere, an welcher Längsposition auf dem Entnahme-Förderer 32 und später auf dem Zuförderer 31 sich die Tasse T befindet, um diese automatisch und exakt unter der richtigen, vorgesehenen Auslauföffnung des Heißgetränke-Bereiters 1 anordnen zu können.

Wie **Figur 1**a zeigt, kann jeder der Entnahme-Förderer 32.1, 32.2, 32.3 eine Tasse T auf jeder beliebigen Etage des entsprechenden Lager-Moduls entnehmen, wobei auf einem Lager-Boden 56 und damit in einer Etage eines Lager-Moduls zum Beispiel 50.3 immer nur eine Sorte von Tassen T vorhanden sein soll, und die Steuerung der Kaffeestation 200 selbstverständlich weiß, in welchem Lager-Modul 50.1, 50.2, 50.3 und auf welcher Etage sich welche Art von Tassen T befindet.

Im in **Figur 1**a dargestellten Fall entnimmt der Entnahme-Förderer 32.3 des dritten Lager-Moduls 50.3 gerade aus der Etage 50d eine Tasse T, wie in der Aufsicht in **Figur 2** sowie in der **Figur 1a** dargestellt.

Sobald sich diese Tasse T vollständig oder zum überwiegenden Teil auf dem Obertrum dieses Entnahme-Förderer 32.3 befindet - was dadurch erreicht werden kann, dass der Spurtrenner 59 bis nahe an das vordere Ende der Entnahme-Spur 56b und damit den Entnahme-Förderer 32.3 heranreicht - wird das Förderband 33 dieses Entnahme-Förderers 32.3 angehalten und der ganze Entnahme-Förderer 32.3 nach unten bewegt, bis die Oberseite des Obertrums 33a seines Förderbandes 33 mit der Oberseite des in der Höhe in aller Regel fix montierten Zuförderers 31 fluchtet, der die entsprechende Tasse T nachfolgend übernimmt und unter der gewünschten Auslauföffnung 2 des Heißgetränke-Bereiters 1 zeitweise abstellt und füllen lässt.

Im vorliegenden Fall befinden sich zwischen diesem hintersten Entnahme-Förderer 32.3 und dem Zuförderer 31 noch zwei weitere Entnahme-Förderer 32.1, 32.2, die sich hierfür ebenfalls auf der Weitergabe-Höhe, also vorzugsweise der Höhe des zu Förderers 31, befinden müssen und gesteuert angetrieben werden müssen, um die zunächst auf dem hintersten Entnahme-Förderer 32.3 stehende Tasse T durch entsprechende Ansteuerung der einzelnen Entnahme-Förderer 32.2 und 32.1 mittels diesen nach links bis zum und auf den Zufuhr-Förderer 31 weiter transportieren zu können.

Gleichzeitig befindet sich im Beispiel der **Figur 1a** auf dem ganz linken Entnahme-Förderer 32.1 bereits eine Tasse T, die noch an den benachbarten Zuförderer 31 übergeben werden muss, wofür sich dieser Entnahme-Förderer 32.1 bereits in der Weitergabe-Stellung, also auf der Weitergabe-Höhe, befindet.

Vorzugsweise wird diese Tasse T zuerst an den Zuförderer 31 übergeben, bevor dieser Entnahme-Förderer 32.1 eine Tasse von einem der weiter stromauf liegenden anderen Entnahme-Förderer 32.3, 32.2 übernimmt, denn dadurch kann am einfachsten vom Zuförderer 31 jede Tasse unter der gewünschten Auslauföffnung platziert werden.

Damit zur Beschleunigung mehrere Gefäße gleichzeitig unter verschiedenen Auslauf-Öffnungen 2 platziert und gefüllt werden können, können weitere - nicht dargestellte - Vorrichtungen vorhanden sein,
- eine gesteuerte Hubvorrichtung, die eine unter einer Auslauföffnung 2 stehende Tasse geringfügig anhebt und damit außer Kontakt mit dem Zuförderer 31 bringt, während diese gefüllt wird, damit dieser inzwischen weitere Tassen übernehmen und herantransportieren kann,
   und/oder
- eine Ausgestaltung des Zuförderers 31 der Gestalt, dass dieser aus mehreren parallel nebeneinander liegenden, jeweils in einer vertikalen Ebene umlaufenden Riemen besteht, von denen beispielsweise jeweils abwechselnd in Querrichtung einerseits ein Set aus dem 1., 3. usw. Riemen und andererseits ein Set aus 2., 4. usw. für je ein Set gemeinsam, aber unabhängig von dem anderen Set von Riemen angetrieben werden können. Die einzelnen Sets von Riemen können in ihrer Höhenlage zueinander leicht verändert werden, sodass mittels eines Sets ein 1. Gefäß und mittels des anderen Sets anschließend ein anderes Gefäß unabhängig davon transportiert werden kann, abhängig davon, welches Set, also dessen Obertrum, momentan höher liegt und Kontakt zu einem darauf befindlichen, sich über beide Sets von Riemen erstreckenden, Gefäß hat.

**Figur 1b** zeigt alternativ, dass es auch nur einen einzigen, über die gesamte Breite aller vorhandenen, nebeneinander stehenden Lager-Module 50.1 - 50.3 durchgehenden, Entnahmeförderer 32 geben kann.

Dann muss dieser so ausgebildet sein, dass er für die Übernahme einer Tasse T aus einem bestimmten Lager-Modul, insbesondere einem Paar von Spuren 56a, b nur den entsprechenden Gefäß-Transporteur 55 antreibt.

Eine Möglichkeit besteht darin, dass die auf einer Etage angeordneten Gefäß-Transporteure 55 und/oder deren Gegen-Elemente nicht auf der exakt gleichen Höhe sondern auf leicht zueinander versetzter Höhe innerhalb dieser Etage angeordnet sind:
Auch gemäß **Figur 1b** soll die Seitenkante des Obertrums 33 a des Förderbandes 33 in Kontakt mit dem Zugelement des Gefäß-Transporteur 55 gebracht werden können, um diesen anzutreiben, indem das Obertrum auf die Höhe des entsprechenden Gefäß-Transporteurs 55, etwa des Reibriemens 58, gebracht wird.

Wie **Figur 1b** erkennen lässt, steht das Obertrum des Förderbandes 33 des Entnahme-Förderers 32 in Kontakt mit einem Zugelement 58 des rechten Lager-Moduls 50.3, weshalb in Blickrichtung der Figur 1B dieses Zugelement 58 genau hinter dem Obertrum liegt und nicht zu erkennen ist.

Dagegen sind die Etagen des mittleren Lager-Moduls 50.2 gegenüber denen des rechten Lager-Moduls 50.3 in der Höhe leicht nach oben versetzt, sodass das Zugelement 58 auf dieser Etage dieses mittleren Lager-Moduls 50.2 über dem Obertrum zu erkennen ist und nicht mit dem Obertrum wirkverbunden ist.

Analog sind die Etagen des linken Lager-Moduls 50.1 gegenüber denen des rechten Lager-Moduls 50.3 in der Höhe leicht nach unten versetzt, sodass das Zugelement 58 auf dieser Etage dieses linken Lager-Moduls 50.2 unter dem Obertrum des Entnahme-Förderers 32 zu erkennen ist und ebenfalls nicht mit dem Obertrum wirkverbunden ist.

Im vorliegenden Fall waren die unteren Etagen des rechten Lager-Moduls 50.3 und teilweise des mittleren Lager-Moduls 50.2 leer, und müssen bei Gelegenheit nachgefüllt werden.

Dies geschieht, indem die Tassen T vorzugsweise manuell in das vordere Ende der Belade-Spur 56a, in diesem Fall der linken Spur des entsprechenden Lager-Boden 56, gestellt und nacheinander in dieser Spur nach hinten geschoben werden, weshalb eventuell vorhandene Mitnehmer 60 in dieser Einschub-Richtung entweder nach hinten schwenkbar sein müssen oder eine solche Schräge aufweisen müssen, dass die Tassen problemlos darüber hinweg geschoben werden können.

Optional können entsprechende, nicht dargestellte, Sensoren melden, ob sich an jeder Position zwischen den Mitnehmern 60 auch tatsächlich eine Tasse T befindet, und auch wann die entsprechende Tasse T bei Ausgabe auf den Entnahme-Förderer 32 ausreichend weit auf diesen hinüber verlagert ist, um in der Folge den Kontakt zwischen Entnahme-Förderer 32 und Gefäß-Transporteur 55 lösen zu können.

Die Weitergabe-Höhe für den Entnahme-Förderer 32 ist vorzugsweise so gewählt und der Zuförderer 31 dementsprechend in einer solchen Höhenlage fixiert, dass sich dabei die Oberseite des Obertraums 33a des Entnahmeförderers 32 nicht auf einer solchen Höhe befindet, dass er dabei mit einem der Gefäß-Transporteure 55 wirkverbunden ist, sondern vorzugsweise zwischen den einzelnen Etagen, vorzugsweise unterhalb dem untersten Lagerboden, also der untersten Etage 50a.

Die **Figur 3** zeigt zunächst, dass der Entnahme-Förderer 32 entlang von Führungen 62 in der Höhe verfahrbar ist und auf der Höhe jeder der Etagen so angehalten werden kann, dass die Oberseite des Obertrums 33a seines Förderbandes 33 mit der Auflagefläche 56" eines Lager-Bodens 56 fluchtet oder sich geringfügig, also maximal ein bis zwei mm, darunter befindet für das leichtere hinüberschieben einer Tasse T auf den Entnahmeförderer 32. In dieser Übernahme-Höhenlage müssen das Koppel-Element des Entnahme-Förderers 32 und das Gegen-Element des Gefäß-Transporteurs 55 in Wirkverbindung sein oder in Wirkverbindung gebracht werden können.

In **Figur 3** ist hierfür jede der beiden Umlenkwalzen 36 des Entnahme-Förderers 32 - von denen eine mit einem eingebauten Motor M, zum Beispiel einem Rohr-Motor M zum Antrieb ausgestattet ist - mit beidseitigen, stirnseitigen Lagerzapfen, insbesondere Motor-Abtriebszapfen, in vertikal verlaufenden Führungen 62 geführt.

Wenn die beiden Umlenkwalzen 36 eines Entnahme-Förderers 32 über Querstreben miteinander verbunden sind, und einer der Zapfen als Ritzel ausgebildet ist, sowie die entsprechende Führung eine damit kämmende Zahnstange umfasst, kann über entsprechende Kupplungen der Motor wahlweise zum Antreiben der Umlenkwalzen 36 und damit des Förderbandes 33 und/oder zur Höhenverlagerung des Entnahme-Förderers 32 oder für beides gemeinsam benutzt werden.

Alternativ kann der Entnahme-Förderer 32 samt des ihn antreibenden Motors M auch in einem Schlitten untergebracht sein, der entlang der dargestellten Führungen 62 in der Höhe verfahrbar ist, dann jedoch in aller Regel mittels eines separaten, nur für die Verfahrbarkeit in der Höhe, vorhandenen Hub-Motors.

Die **Figur 3** zeigt weiterhin Möglichkeiten, wie mittels eines der Entnahmeförderer 32 einer der Gefäß-Transporteure 55, insbesondere ein Reibriemen 58, angetrieben werden kann:
Es soll zunächst klargestellt werden, dass in aller Regel keine zwei Entnahmeförderer 32 übereinander vorhanden sind, sondern pro Lager-Modul nur ein Entnahme-Förderer 32 vorhanden ist. Die Darstellung der **Figur 3** dient lediglich der Erläuterung verschiedener Kopplungs-Möglichkeiten zwischen einem Koppelelement 54a des Entnahme-Förderers 32 und einem Gegenelement 54b des Gefäß-Transporteurs 55.

Bei dem in **Figur 3** **oben** dargestellten Entnahme-Förderer 32 ist das Obertrum 33a des Förderbandes 33 des Entnahme-Förderers 32 auf der Höhe des Reibriemens 58 positioniert und liegt kraftschlüssig an der aus dem Lager-Modul 50 nach außen weisenden Seite des Reibriemens 58 an, unabhängig davon, ob dieser die in **Figur 3** **oben** dargestellten Mitnehmer 60 trägt - weshalb der dortige Reibriemen 58 selbst nicht über die Auflagefläche 56" des Lager-Bodens 56 vorstehen muss - oder nicht.

Koppelelement 54a und Gegenelement 54b sind hier also die beiden reibschlüssig aneinander anliegenden Flächen des Entnahme-Förderers 32 einerseits und des Gefäß-Transporteurs 55 andererseits.

In **Figur 3** **unten** ist dagegen eine formschlüssige Kopplung dargestellt, in dem das Zugelement, insbesondere der Reibriemen 58 - der in diesem Fall über die Auflagefläche 56" nach oben vorsteht - an zumindest seiner bezüglich des Umlautes des Zugelementes Außenseite eine Verzahnung 63a aufweist und ebenso das Förderband 33 an der dem Reibriemen 58, also dem Lager-Modul 50, zu gewandten Schmalseite eine Verzahnung 63b.

Die vertikal verlaufenden Zähne der beiden Verzahnungen 63a, b sind am oberen und unteren Ende vorzugsweise jeweils so angeschrägt, dass beim Einfahren des Förderbandes 33 in der Vertikalen 10 in die Verzahnung 63b des Zugelementes 58 das Einfädeln ohne gegenseitige Blockade von statten geht und insbesondere ohne das Zugelement 58 aus seiner Umlenkrolle 57 nach oben oder unten heraus zu schieben.

Koppelelement 54a und Gegenelement 54b sind hier also die beiden formschlüssig ineinander greifenden Verzahnungen 63 a, b.

### BEZUGSZEICHENLISTE

- 1: Heißgetränke-Bereiter
- 2: Auslauföffnung

- 10: Vertikale
- 11: horizontale Querrichtung

- 30: Zufuhreinheit
- 31: Zuförderer
- 31': Transportrichtung
- 32: Entnahme-Förderer
- 32': Transportrichtung
- 33: Förderband
- 33a: Obertrum
- 33b: Untertrum
- 34: Kommissionierfläche
- 35: Umlenkwalze

- 50: Tassen-Lager
- 50.1,50.2: Lager-Modul
- 50a, b, c: Etage
- 50': Tiefenrichtung
- 51: Lager-Gehäuse, Lager-Gestell
- 52: Nut
- 53: Eck-Führung
- 54a: Koppelelement
- 54b: Gegenelement
- 55: Gefäß-Transporteur
- 55": Ebene
- 56: Lager-Boden
- 56a,b: Spur
- 56": Auflagefläche
- 57: Umlenkrolle
- 58: Reibriemen, Riemen
- 58": Ebene
- 59: Spurteiler
- 60: Mitnehmer
- 61: Tragarm
- 62: Führung
- 63a, b: Verzahnung

- 200: Kaffeestation

- F: flüssiges Getränk
- G: Gefäß/Glas
- G': Axialrichtung
- M: Motor
- T: Tasse
- UT: Untertasse

## Patentansprüche

1. **Kaffeestation** (200) zum Füllen eines Gefäßes (G), insbesondere einer Tasse (T), mit einem heißen, flüssigen Getränk (F), mit
- einem Heißgetränke-Bereiter (1) mit wenigstens einer Auslauföffnung (3) zum Abgeben des heißen flüssigen Getränkes (F),
**gekennzeichnet durch**
- eine Zufuhreinheit (30) zum automatischen, gesteuerten Zuführen des richtigen, leeren Gefäßes (G), insbesondere einer Tasse (T), zum Heißgetränke-Bereiter (1) und automatischen Positionieren unter dessen Auslauföffnung (2) sowie automatischen Befüllen des Gefäßes (G),
- einer Steuerung zum Steuern zumindest aller beweglichen Elemente der Kaffeestation (200), insbesondere auch zum Steuern des Heißgetränke-Bereiters (1).
(Zufuhreinheit:)

2. Kaffeestation nach Anspruch 1,
**dadurch gekennzeichnet, dass**
- die Zufuhreinheit (30) einen gesteuert antreibbaren Zuförderer (31) zum Zuführen des leeren Gefäßes (G) zum Heißgetränke-Bereiter (1), insbesondere von einem Tassen-Lager (50) aus, umfasst,
- der insbesondere auf der dem Bediener B zugewandten Vorderseite des Heißgetränke-Bereiters (1) verläuft
und/oder
- der insbesondere in einer fixen Höhenlage verläuft.
(Tassen-Lager:)

3. Kaffeestation nach einem der vorhergehenden Ansprüche,
**dadurch gekennzeichnet, dass**
die Zufuhr-Einheit (30) umfasst
- ein Tassen-Lager (50) mit mindestens einem Lager-Boden (56) zum darauf Abstellen von Gefäßen (G), insbesondere Tassen (T),
- insbesondere mit mehreren Lager-Böden (56) in mehreren Etagen (50a, b, c,) übereinander und/oder in einer Etage nebeneinander,
- wobei die Lager-Böden (56) in einem Lager-Gestell (51), vorzugsweise in einem, insbesondere beheizten, Lager-Gehäuse (51) angeordnet sind.

4. Kaffeestation nach einem der vorhergehenden Ansprüche,
**dadurch gekennzeichnet, dass**
- das Tassen-Lager (50) mehrere nebeneinander stehende Lager-Module (50.1, 50.2, 50.3) umfasst,
- insbesondere die Lager-Böden (56) der einzelnen Etagen bei den verschiedenen Lager-Modulen (50.1, 50.2, 50.3) eine geringfügig unterschiedliche Höhenlage, zu dem jeweiligen Lager-Gestell (51) des Lager-Moduls (50.1, 50.2, 50.3) einnehmen.

5. Kaffeestation nach einem der vorhergehenden Ansprüche,
**dadurch gekennzeichnet, dass**
- ein in einer, insbesondere horizontalen, Ebene (58") umlaufender Gefäß-Transporteur (55) zum Vorwärtstransportieren der Gefäße (G) innerhalb einer Etage (50a, b, c,) des Tassen-Lagers (50), vorzugsweise auf jeder Etage und/oder vorzugsweise für jeden Lager-Boden (56) jedes Lager-Moduls(50.1, 50.2, 50.3), vorhanden ist.
(Entnahme-Förderer)

6. Kaffeestation nach einem der vorhergehenden Ansprüche,
**dadurch gekennzeichnet, dass**
das Tassen-Lager (50) mindestens einen Entnahme-Förderer (32) umfasst, welcher der Entnahme von Gefäßen (G) aus dem Tassen-Lager (50) und Übergeben an den stromabwärtigen Zuförderer (31) dient.

7. Kaffeestation nach einem der vorhergehenden Ansprüche,
**dadurch gekennzeichnet, dass**
- das Tassen-Lager (50) eine wenigstens teilweise offene Frontseite besitzt, über die das Tassen-Lager (50) befüllt werden kann als auch Gefäße (G) daraus entnommen werden können und
- der Entnahme-Förderer (32) entlang der Frontseite, insbesondere des offenen Teils der Frontseite, verläuft,
und/oder
- die Lager-Böden (56) von der dem Entnahme-Förderer (32) zugewandten Frontseite her in das Tassen-Lager (50) einschiebbar als auch herausziehbar sind.
(Gefäß-Transporteur)

8. Kaffeestation nach einem der vorhergehenden Ansprüche,
**dadurch gekennzeichnet, dass**
- der, insbesondere endlose, Gefäß-Transporteur (55) in seiner Verlaufsrichtung, insbesondere Umlaufrichtung, beabstandete Mitnehmer (60) aufweist, die je eines von in dieser Etage oder auf diesem Lager-Boden (56) bevorratete Art von Gefäß (G) vor sich her schieben und innerhalb der Etage transportieren können
und/oder.
- der Gefäß-Transporteur (55) mindestens ein Reib-Element umfasst, insbesondere ein Reibriemen (58) ist, auf dessen Oberseite die in dieser Etage, insbesondere die auf diesem Lager-Boden, bevorrateten Gefäße (G) aufsitzen und transportiert werden können.

9. Kaffeestation nach einem der vorhergehenden Ansprüche,
**dadurch gekennzeichnet, dass**
- der gesteuert antreibbare Entnahme-Förderer (32) ein Koppel-Element (54a) umfasst, welches in Wirkverbindung, insbesondere in Eingriff, bringbar ist mit einem Gegen-Element (54b), welches mit einem Gefäß-Transporteur (55) wirkverbunden ist,
- insbesondere der Gefäß-Transporteur (55) über keinen eigenen Antriebsmotor verfügt.

10. Kaffeestation nach einem der vorhergehenden Ansprüche,
**dadurch gekennzeichnet, dass**
- die Gefäße (G) auf aus dem Tassen-Lager (50) entnehmbaren Lager-Böden (56) in zwei, insbesondere nur zwei, nebeneinander in Tiefenrichtung (50') verlaufenden Spuren (56a, b) angeordnet und geführt sind,
- der über mindestens zwei Umlenkrollen (57) umlaufende Gefäß-Transporteur (55) in einer Ebene (58") parallel zur Auflagefläche (56.1) des Lager-Bodens (56), insbesondere in einer Nut (52), umläuft und mit seinen Mitnehmer (60) oder insbesondere seiner Oberseite über die Auflagefläche (56.1) hinaus ragt und
- der Gefäß-Transporteur (55), insbesondere der Reibriemen (58), mit jedem seiner in Tiefenrichtung (51') des Tassen-Lagers (50) verlaufenden Trume (58a, b) unter einer der Spuren (56a, b) verläuft
und/oder
- der Gefäß-Transporteur (55) sowie der gesteuert auf gleiche Höhe oder geringfügig niedriger bringbare Entnahme-Förderer (32) so nah zueinander angeordnet sind, dass ein mittels des Gefäß-Transporteurs (55) aus der Frontseite des Tassen-Lagers (50) heraus geschobenes Gefäß (G) dadurch auf den unmittelbar benachbarten Entnahme-Förderer (32) verlagert, insbesondere geschoben wird.
(Entnahme-Förderer)

11. Kaffeestation nach einem der vorhergehenden Ansprüche,
**dadurch gekennzeichnet, dass**
bei einem Tassen-Lager (50) mit mehreren Lager-Etagen (50a, b, c, d) übereinander
- entweder der Entnahme-Förderer (32)
und/oder
- das Lager-Gestell (51) des Tassen-Lagers (50)
in der Höhe gesteuert verfahrbar ist
und/oder
- auf einem Lager-Boden (56), insbesondere den mittels des gleichen Gefäß-Transporteurs (55) verbundenen Spuren (56a, b), nur eine Sorte von Gefäßen (G) bevorratet ist.

12. Kaffeestation nach einem der vorhergehenden Ansprüche,
**dadurch gekennzeichnet, dass**
das Tassen-Lager (50) einschließlich des Entnahme-Förderers (32) maximal nur einen Motor (M) pro Entnahme-Förderer (32), insbesondere höchstens insgesamt nur einen Motor (M), aufweist.
(Gegenelement)

13. Kaffeestation nach einem der vorhergehenden Ansprüche,
**dadurch gekennzeichnet, dass**
das Gegenelement (54b)
- entweder ein über die vordere Stirnfläche des Lager-Bodens (56) hinaus vorstehender Abschnitt des Gefäß-Transporteurs (55), insbesondere des Reibriemens (58), ist, welcher insbesondere in Kontakt bringbar ist mit der Seitenkante des Entnahme-Förderers (32) als Koppelelement (54a),
- oder ein mit einer der Umlenkrollen (57) des Gefäß-Transporteurs (55) drehfest verbundenes Gegenelement (54b) ist, welches koppelbar ist mit einem drehend antreibbaren Koppelelement (54a), welches insbesondere Bestandteil des Entnahme-Förderers (32) ist.

14. **Verfahren** zum Zuführen zu sowie Füllen eines Gefäßes (G) mit einem aus wenigstens einer nach unten gerichteten Auslauföffnung (2), insbesondere eines Heißgetränke-Bereiters (1), strömenden flüssigen Getränk (F), **dadurch gekennzeichnet, dass**
ein Gefäß (G), insbesondere eine Tasse (T), der richtigen Sorte, automatisch
- aus einem Gefäß-Lager (50) von der entnahmeseitig vordersten Position einer sich in dessen Tiefenrichtung (50') erstreckenden Spur (56a, b) aus einer dortigen Reihe von gleichartigen Gefäßen (G) entnommen und
- an einen Zuförderer (31) zum Zuführen zum Heißgetränke-Bereiter (1) übergeben wird.

15. Verfahren nach Anspruch 14,
wobei das Bewegen der Gefäße (G) in der Spur mittels eines Gefäß-Transporteurs (55) und das Entnehmen des vordersten Gefäßes (G) aus der Spur mittels eines Entnahme-Förderers (32) erfolgt,
**dadurch gekennzeichnet, dass**
- ein Koppel-Element (54a) des Entnahme-Förderers (32) in Kontakt mit einem Gegenelement (54b) des Gefäß-Transporteurs (55) gebracht wird,
- der Antrieb des Entnahme-Förderers (32) in Gang gesetzt wird bis das vorderste Gefäß (G) auf den Entnahme-Förderer (32) herüber geschoben ist,
- Koppel-Element (54a) und Gegen-Element (54b) außer Eingriff gebracht werden,
- der Entnahme-Förderer (32) das darauf stehende Gefäß (G) weiter transportiert und an den Zuförderer (31) übergibt.

16. Verfahren nach Anspruch 14 oder 15,
**dadurch gekennzeichnet, dass**
vor dem Kontaktieren von Koppel-Element (54a) und Gegen-Element (54b) der Entnahme-Förderer (32) auf die Höhe der Etage (50a, b) gebracht und dort positioniert wird, aus der das Gefäß (G) entnommen werden soll,
insbesondere
- der Zuförderer (31) gesteuert so angetrieben wird, bis das Gefäß (G) unter der gewünschten Auslauföffnung (2) des Heißgeräte-bereiteres (1) steht, und
- der Zuförderer (31) angehalten und das Gefäß (G) mit dem flüssigen Getränk (F) gefüllt wird.
